# EUROPEAN PATENT APPLICATION

(11) **EP 0 707 156 A1**
(43) Date of publication of application: **17.04.1996**
(21) Application number: 95306751.9
(22) Date of filing: 25.09.1995
(51) Int. Cl.: F16B 43/00, F16B 29/00, F16B 37/06

(54) **Fastener assembly**

(30) Priority: 14.10.1994 GB 9420792
(71) Applicant: EMHART INC., Newark, Delaware 19711 (US)
(72) Inventor: Smith, Daniel Robert, Castle Bromwich, Birmingham B36 9BG (GB)
(74) Representative: Moffat, John Andrew

(57) **Abstract**

A fastener assembly (2) comprises a blind rivet nut (4), comprising a mandrel (8), in the form of a headed screw, a rivet body (14) having a rivet head (16) and a shank (17) having a threaded bore (18) and a cup shaped washer (6) assembled between the head of the rivet body (16) and that of the mandrel (10).

In use, the rivet body (14) is set in a workpiece (42) and conventional manner. Another workpiece (40) is located over the cup shaped washer (6), the mandrel (8) is screwed into the set rivet body (14) and the head of the mandrel (10) forces fingers (30) of the washer (6) radially outward to retain the second workpiece (40) in position.

## Description

This invention is concerned with fastener assemblies which are useful in detachably securing one workpiece to another.

One fastener assembly which is conveniently used in securing, detachably, one work piece to another is often referred to as a rivet nut. A rivet nut comprises a rivet body comprising a head and a shank extending from the head, a bore extending from the head in the body, which bore comprises at least a portion which is threaded. A screw, comprising a head and a threaded shank, is engaged into the threaded portion of the bore; in use, the rivet body is inserted in a hole in a workpiece, a tool is caused to engage the head of the rivet body, thus to force it against the workpiece, and the head of the screw, thus to draw it away from the rivet body to cause setting of the rivet body in the hole in the workpiece.

Once such a rivet nut has been set, a further second workpiece can be secured to the first workpiece. This can be done by removing the screw from the rivet body and using it to attach the second workpiece in a conventional way - a procedure which entails removing the screw, replacing it through the second workpiece and tightening it up. Such an operation is somewhat time consuming and inconvenient.

An alternative way of securing a second workpiece is to provide a keyhole slot in the workpiece, slide the larger hole of the keyhole slot over the screw head, slide the workpiece transversely so that the narrow slot surrounds the shank of the screw and then tighten the screw. This has the disadvantage that the punching of keyhole slots in a workpiece is comparatively expensive, and if the workpiece is to be attached at more than one point very careful positioning and orientation of the keyhole slots is essential.

It is one of the objects of the present invention to provide an improved method of securing two workpieces detachably together.

We have found it advantageous to utilize an assembly comprising a blind rivet nut, combined with a cup shaped washer which washer comprises a circular base having a central hole and a cylindrical wall provided with a plurality of slots which divide it into a plurality of fingers. In use, such an assembly is positioned in a hole in a substrate and the blind rivet nut is set. A second workpiece also comprising a hole of appropriate size, is positioned over the assembly and the screw of the rivet nut is then tightened to force the fingers of the washer outwards to overlap the second workpiece and secure it to the substrate. Thus the second workpiece can be secured to the first workpiece without requiring the punching of keyhole slots, and without the necessity of removing the screw of the rivet nut to attach the workpiece.

The present invention provides, in one of its aspects an assembly comprising a blind rivet nut and a cup shaped washer, characterised in that the nut comprises a mandrel having a head and a threaded shank, a rivet body comprising a rivet head and a shank having a threaded bore, the mandrel being engaged in the threaded bore, and the washer is assembled between the head of the rivet body and the head of the mandrel, the washer comprising a circular base having a central hole therethrough, a cylindrical wall extending perpendicular to the base and coaxial with the hole, said wall being provided with a plurality of longitudinally extending slots extending towards the base from an end of the wall thus to provide a plurality of fingers.

The present invention also provides, in another of its aspects, a method of securing a workpiece to a substrate, the workpiece and the substrate each comprising a hole
in which an assembly as set out in the last preceding paragraph is positioned in the hole in the substrate,
a setting operation is performed to set the rivet body in the hole in the substrate,
the workpiece is positioned over the assembly with the screw and the washer of the assembly extending through the hole in the workpiece,
the mandrel is screwed into the rivet body, and the head of the mandrel engages the fingers of the washer to force them radially outward to overlap the workpiece and secure it to the substrate.

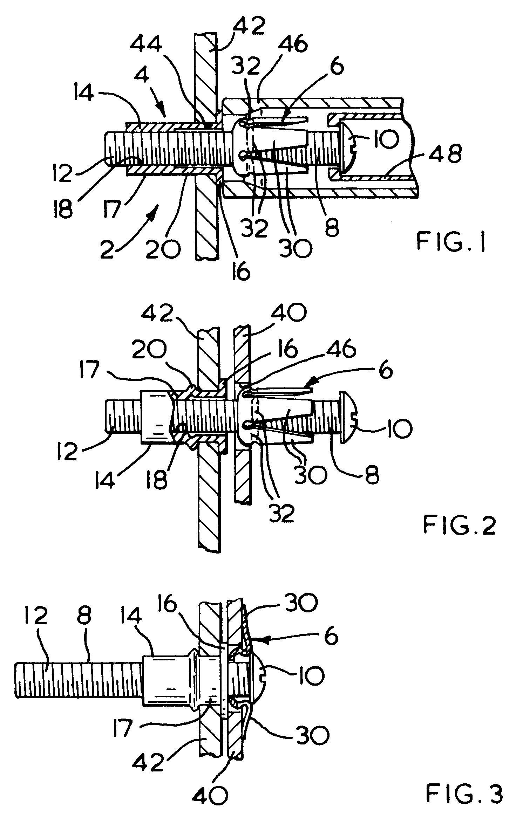

In the accompanying drawings:-
Figure 1 shows a view in section of an assembly embodying the invention and comprising a blind rivet nut and a washer, the assembly being positioned in a hole in a substrate and the rivet nut being about to be set
Figure 2 shows a view similar to Figure 1 with the rivet nut set in the substrate and a workpiece positioned over the assembly
Figure 3 shows a view similar to Figure 1 with the workpiece secured to the substrate
Figure 4 shows a plan view of the washer in the condition shown in Figure 3.
Figure 5 shows a side view of the washer
The assembly 2 which is shown in Figure 1 comprises a blind rivet nut 4 and a washer 6. The blind rivet nut is of conventional construction and comprises a mandrel 8 in the form of a screw having a slotted head 10 and a screw threaded shank 12. The blind rivet nut 2 also comprises a rivet body 14 which comprises a rivet head 16 and a cylindrical shank 17 which provides a threaded bore 18 spaced from the rivet head by a portion of the shank of lesser thickness 20. As can be seen a continuous bore 21 extends right through the shank 17.

The screw threaded shank 12 of the mandrel 8 is engaged in the threaded bore 18 of the shank 17, but is free from engagement with the portion 20 of the shank 17.

The washer 6 [Figure 5] of the assembly, may be made of plastics or of a deformable metal such as mild steel. The washer 6 comprises a circular base 22 having a central hole 23 therein, and a cylindrical wall 24 extending perpendicular to the base coaxial with the hole 23. The wall 24 is provided with a plurality (in the embodiment illustrated five) of slots 26 extending longitudinally towards the base 22 from an end 25 of the wall, thus to provide a plurality of longitudinally extending fingers 30. The slots 26 each taper from the end 25 of the wall and terminate in a generally circular portion 28, which serves to minimize strain on deformation of the washer 6. Outer end portion of the fingers 30 are provided with an internal chamfer 38.

Each of the fingers 30 is provided with a circumferentially extending recess 32 positioned adjacent that, inner, end portion of the finger 30 adjoining the base 22. The recesses 32 do not extend for quite the whole width of the finger and have parallel sides, which extend in a circumferential direction, and rounded ends. The recesses are spaced a short distance away from the circular portion 28 towards the outer end portions of the fingers.

The washer 6 is assembled on the mandrel 8 between the head 16 of the rivet body and the head 10 of the mandrel. The fingers 30 extend coaxially alongside the shank 12.

In the use of the assembly 2 to secure a workpiece 40 to a substrate 42, the workpiece and the substrate are each provided with a hole, the hole 44 in the substrate 42 being slightly smaller than the hole 46 in the workpiece 40, but it will be understood that the size of the assembly 2 will be chosen with reference to the sizes of the holes in the substrate and workpiece.

A conventional setting operation is the carried out on the assembly - the rivet body being placed in the hole 44 with the rivet head 16 in contact with the substrate 42, the rivet head is supported by a nosepiece 46 of a conventional setting tool, while a collet 48 engages the head 10 of the threaded mandrel 8, thus to set the rivet in the substrate 42 as shown in Figure 1.

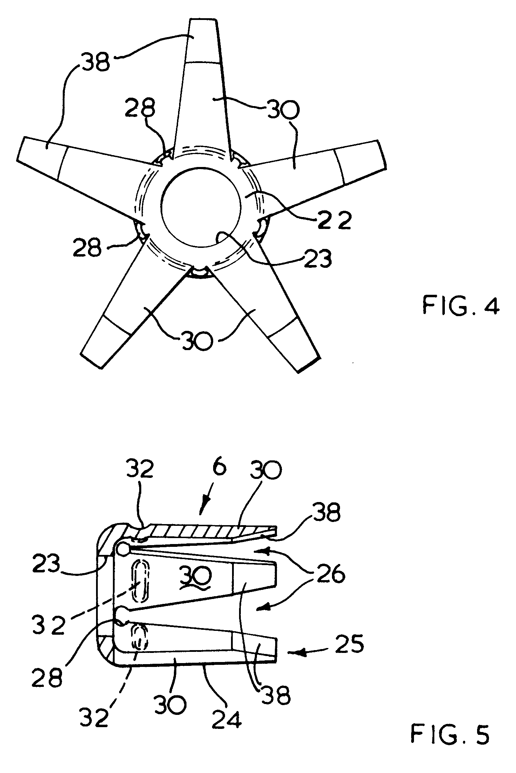

The workpiece 40 is then positioned over the assembly 2, the hole 46 being slightly larger in diameter than the outside diameter of the washer 6. The mandrel 8 and the washer 6 of the assembly 2 thus extend through the hole 46 (see Figure 2). The mandrel 8 is then screwed into the rivet body 14, and the head 10 of the mandrel engages the fingers 30, facilitated by the chamfer 38, and as the head 10 is forced towards the workpiece it forces the fingers 30 radially outward to overlap the workpiece 40 and secure it in position as shown in figures 3 & 4. Although the head 10 is necessarily somewhat smaller than the hole 46, the fingers 30 hold the workpiece 40 firmly against the head 16 of the rivet when the mandrel 8 is fully tightened.

It can be seem that if, in the substrate 42, a series of assemblies are set in positions corresponding to a series to holes in the workpiece 40, the workpiece 40 can be positioned over these assemblies, the mandrels of the assemblies screwed down and thus the workpiece 40 is readily attached to the substrate 42.

## Claims

1. An assembly comprising a blind rivet nut and a washer, characterised in that said nut comprises a mandrel having a head and a threaded shank and a rivet body comprising a rivet head and a shank having a threaded bore, the mandrel being engaged in the threaded bore and the washer is assembled between the head of the rivet body and the head of the mandrel, the washer comprising a circular base having a central hole therein, a cylindrical wall extending perpendicular to the base and coaxial with the hole, said wall being provided with a plurality of longitudinally extending slots extending towards the base from an end of the wall thus to provide a plurality of fingers.

2. An assembly according to Claim 1, characterised in that each of the fingers of the washer is provided with a circumferentially extending recess adjacent that inner end portion of the finger adjoining the base.

3. An assembly according to Claim 2, characterised in that the outer end portion of each finger is provided with an internal chamfer.

4. An assembly according to any one of the preceding claims, characterised in that the washer is made from plastics.

5. An assembly according to anyone of Claims 1, 2 and 3, characterised in that the washer is made from metal.

6. An assembly according to Claim 1, characterised in that each slot tapers from the end of the wall towards the base, and terminates in a generally circular portion.

7. A method of securing a workpiece to a substrate, the workpiece and the substrate each comprising a hole, characterised in that
an assembly according to any previous claim is positioned in the hole in the substrate,
a setting operation is performed to set the rivet body in the hole in the substrate,
the workpiece is positioned over the assembly with the mandrel and the washer of the assembly extending through the hole in the workpiece,
the mandrel is screwed into the rivet body and the head of the mandrel engages the fingers of the washer to force them radially outwards to overlap the workpiece and secure it to the substrate.
